# EUROPEAN PATENT APPLICATION

(11) **EP 4 726 873 A1**
(43) Date of publication of application: **15.04.2026**
(21) Application number: 25208280.5
(22) Date of filing: 13.10.2025
(51) Int. Cl.: H01M 50/147, H01M 50/172, H01M 50/188, H01M 50/531, H01M 50/552, H01M 50/557, H01M 50/586, H01M 50/593

(54) **CAP ASSEMBLY AND SECONDARY BATTERY INCLUDING SAME**

(30) Priority: 14.10.2024 KR 20240139705; 19.08.2025 KR 20250114978
(71) Applicant: SAMSUNG SDI CO., LTD., Yongin-si, Gyeonggi-do 17084 (KR)
(72) Inventor: KIM, Hyeokjoo, Yongin-Si, Gyeonggi-do 17084 (KR); YOO, Seungyeol, Yongin-Si, Gyeonggi-do 17084 (KR); KIM, Heonhee, Yongin-Si, Gyeonggi-do 17084 (KR); KIM, Duckhyun, Yongin-Si, Gyeonggi-do 17084 (KR); JANG, Woonsuk, Yongin-Si, Gyeonggi-do 17084 (KR)
(74) Representative: Gulde & Partner

(57) **Abstract**

A cap assembly including a cap plate, a terminal plate joined to an opening in the cap plate, and an insulator between the cap plate and the terminal plate, wherein the terminal plate includes a current collector portion electrically connectable to an electrode assembly, and an electrode terminal portion continuously connected to the current collector portion in a longitudinal direction of the terminal plate.

## Description

### BACKGROUND

### 1. Field

Embodiments relate to a cap assembly and secondary battery including same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments are directed to a cap assembly including a cap plate, a terminal plate joined to an opening in the cap plate, and an insulator between the cap plate and the terminal plate, wherein the terminal plate includes a current collector portion electrically connectable to an electrode assembly, and an electrode terminal portion continuously connected to the current collector portion in a longitudinal direction of the terminal plate.

In other, words the terminal plate may include (consist of) electrode terminal portion and the current collector both integrally (continuously) formed.

The current collector portion may include a first current collector portion and a second current collector portion that may each be electrically connectable to an electrode assembly, and the electrode terminal portion may be between the first current collector portion and the second current collector portion.

An upper surface of the electrode terminal portion may be higher than an upper surface of the current collector portion in a thickness direction (e.g. x-axis direction) of the terminal plate.

A lower surface of the electrode terminal portion may be higher than a lower surface of the current collector portion in a thickness direction (e.g. x-axis direction) of the terminal plate.

A distance between an upper surface of the electrode terminal portion and an upper surface of the current collector portion in a thickness direction (e.g. x-axis direction) of the terminal plate may be 0.1 mm to 3 mm.

A distance between a lower surface of the electrode terminal portion and a lower surface of the current collector portion in a thickness direction (e.g. x-axis direction) of the terminal plate may be 0.1 mm to 3 mm.

A thickness of the current collector portion may be 0.1 mm to 3 mm, preferably 0.2 mm to 3 mm.

An upper surface of the current collector portion and an upper surface of the electrode terminal portion may face the same direction.

The insulator may include a protrusion portion extending toward the terminal plate and a joining portion joined to the cap plate, and the terminal plate may include a recessed portion engaged with the protrusion portion.

At least a part of a side surface of the terminal plate that comes into contact with the insulator may be etched and electrolytically treated. Preferably, the terminal plate may comprise pores on at least a part of a side surface of the terminal plate that is in direct contact with the insulator.

Embodiments are directed to a cap assembly, including a cap plate, a terminal plate coupled to an opening in the cap plate, and an insulator between the cap plate and the terminal plate, the insulator including a peripheral part, a connection part connecting a first side surface of the peripheral part and a second side surface of the peripheral part facing each other in a longitudinal direction of the peripheral part, and a first opening and a second opening each bordered by the connection part and the peripheral part, wherein the terminal plate includes a current collector electrically connectable to an electrode assembly, and an electrode terminal part continuously connected to the current collector in a longitudinal direction of the terminal plate, the current collector includes a first current collector and a second current collector which are electrically connectable to the electrode assembly, the electrode terminal part is between the first current collector and the second current collector, the first current collector borders the first opening and the second current collector borders the second opening, and the connection part is below the electrode terminal part.

The connection part may connect a lower part of the first side surface and a lower part of the second side surface to each other, and the peripheral part and the connection part may be integrally connected. By integrally forming the peripheral part and the connection part, the insulator becomes a single, monolithic component, which simplifies manufacturing and assembly. This structural integration improves mechanical stability and reduces the risk of misalignment or leakage between the cap plate and the terminal plate. It also improves long-term reliability by minimizing the number of interfaces prone to wear or degradation.

In a thickness direction of the terminal plate, an upper surface of the electrode terminal part may be higher than an upper surface of the current collector. This step structure allows the electrode terminal part to protrude outward relative to the current collector portions, facilitating easy and secure electrical connection to external components such as busbars. The height offset enhances assembly precision and lowers contact resistance at the connection point, which contributes to improved electrical performance and reduced heat generation.

In a thickness direction of the terminal plate, a lower surface of the electrode terminal part may be higher than a lower surface of the current collector. The elevation of the lower surface of the electrode terminal part relative to the current collector portions creates a spatial separation from the underlying electrode assembly. This design effectively reduces the risk of electrical short circuits between the terminal plate and the electrode stack. It also provides space to accommodate an insulating material, further enhancing the safety and insulation of the cap assembly.

Embodiments are directed to a secondary battery including an electrode assembly including a plurality of electrode plates having a plurality of tabs on one side thereof and a separator between the electrode plates, a case accommodating the electrode assembly and having an opening on one side thereof, and a cap assembly joined to the opening of the case, wherein the cap assembly includes a cap plate, a terminal plate joined to an opening in the cap plate, and an insulator between the cap plate and the terminal plate, and wherein the terminal plate includes a current collector portion electrically connectable to an electrode assembly, and the electrode terminal portion continuously connected to the current collector portion in a longitudinal direction of the terminal plate. In other, words the terminal plate may include (consist of) the electrode terminal portion and the current collector both integrally (continuously) formed.

The tabs may be connected to the current collector portion in a bent state.

The tabs may include a first tab and a second tab spaced apart from the first tab, and a bending direction of the first tab may be different from a bending direction of the second tab.

The current collector portion may include a first current collector portion and a second current collector portion that may each be electrically connectable to the electrode assembly, and the electrode terminal portion may be between the first current collector portion and the second current collector portion.

The tabs may include a first tab and a second tab spaced apart from the first tab, the first tab may be connected to the first current collector portion, and the second tab may be connected to the second current collector portion.

An upper surface of the electrode terminal portion may be higher than an upper surface of the current collector portion in a thickness direction (e.g. x-axis direction) of the terminal plate.

A lower surface of the electrode terminal portion may be higher than a lower surface of the current collector portion in a thickness direction (e.g. x-axis direction) of the terminal plate.

An upper surface of the current collector portion and an upper surface of the electrode terminal portion may face the same direction.

The insulator may include a protrusion portion extending into the terminal plate and a joining portion joined to the cap plate, and the terminal plate includes a recessed portion engaged with the protrusion portion.

At least a part of a side surface of the terminal plate that comes into contact with the insulator may be etched and electrolytically treated.

Preferably, the terminal plate may comprise pores on at least a part of a side surface of the terminal plate that is in direct contact with the insulator.

At least a part of a side surface of the cap plate that comes into contact with the insulator is etched and electrolytically treated.

Preferably, the cap plate may comprise pores on at least a part of a side surface of the cap plate that is in direct contact with the insulator.

The terminal plate includes a first recessed portion in which the current collector portion and the insulator are engaged with each other, and a second recessed portion in which the electrode terminal portion and the insulator are engaged with each other.

### BRIEF DESCRIPTION OF DRAWINGS

Features will become apparent to those of skill in the art by describing in detail exemplary embodiments with reference to the attached drawings in which:
The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an example of a battery cell according to an embodiment of the present disclosure;
FIG. 2 illustrates a perspective view showing an example of a cap assembly according to an embodiment of the present disclosure;
FIG. 3 illustrates a plan view showing an example of a cap assembly according to an embodiment of the present disclosure;
FIG. 4 illustrates an exploded perspective view showing an example of a cap assembly according to an embodiment of the present disclosure;
FIG. 5 illustrates a cross-sectional view showing an example of a cap assembly according to an embodiment of the present disclosure;
FIG. 6 illustrates an example in which an insulator and a terminal plate are joined in an opening of a cap plate according to an embodiment of the present disclosure;
FIG. 7 illustrates an example of an electrode plate according to an embodiment of the present disclosure;
FIG. 8 illustrates an example in which an electrode assembly is connected to a terminal plate according to an embodiment of the present disclosure; and
FIG. 9 illustrates an example of a terminal plate according to an embodiment of the present disclosure.
FIG. 10 illustrates an exploded perspective view showing an example of a cap assembly according to an embodiment of the present disclosure.
FIG. 11 illustrates a cross-sectional view showing an example of a cap assembly according to an embodiment of the present disclosure.
FIG. 12 illustrates a diagram showing an example of an insulator according to an embodiment of the present disclosure.
FIG. 13 illustrates a diagram showing an example of an insulator according to another embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the sizes and relative sizes of layers and regions shown in the drawings may be exaggerated for clarity of description. That is, the sizes shown in the drawings are only for convenience of understanding and are not limited thereto. In addition, the same reference numerals denote the same elements throughout the specification.

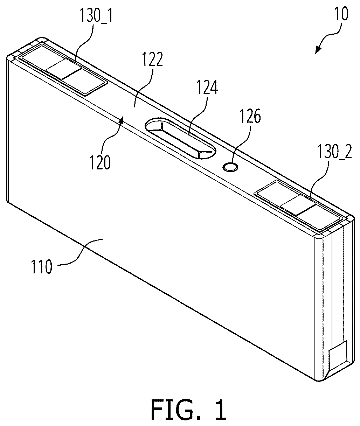

FIG. 1 illustrates an example of a secondary battery 10 according to an embodiment of the present disclosure. Referring to FIG. 1, the secondary battery 10 according to one or more embodiments of the present disclosure may include at least one electrode assembly wound with a separator as an insulator between the positive electrode and the negative electrode, a case 110 in which the electrode assembly is received (or accommodated) therein, and a cap assembly 120 coupled to an opening of the case 110.

The secondary battery 10 according to one or more embodiments will now be described as an example of a prismatic lithium ion secondary battery. However, the present disclosure is not limited thereto, and suitable aspects, features and principles described herein may be applied to various other types of batteries, such as lithium polymer batteries and/or cylindrical batteries.

Each of the positive electrode and the negative electrode may include a current collector made of a thin metal foil having a coated portion on which an active material is coated and an uncoated portion on which an active material is not coated.

The positive electrode and the negative electrode are wound after interposing the separator, which is an insulator, therebetween. However, the present disclosure is not limited thereto, and the electrode assembly may have a structure in which a positive electrode and a negative electrode, each made of a plurality of sheets, are alternately stacked with a separator interposed therebetween.

The case 110 may form the overall outer appearance of the secondary battery 10 and may be made of a conductive metal, such as aluminum, aluminum alloy, or nickel-plated steel. In addition, the case 110 may provide a space in which the electrode assembly is accommodated.

The cap assembly 120 may include a cap plate 122 covering an opening in the case 110, and the case 110 and the cap plate 122 may be made of a conductive material. Terminal plates 130_1 and 130_2 electrically connected to the positive electrode and the negative electrode, respectively, may be installed to penetrate (or extend through) the cap plate 122 and protrude outwardly therethrough.

In addition, the cap plate 122 may be made of a thin plate and may be coupled to the opening in the case 110, and an electrolyte injection port into which a sealing stopper 126 may be installed may be located (e.g., formed) in the cap plate 122, and a vent portion 124 having a notch may be installed.

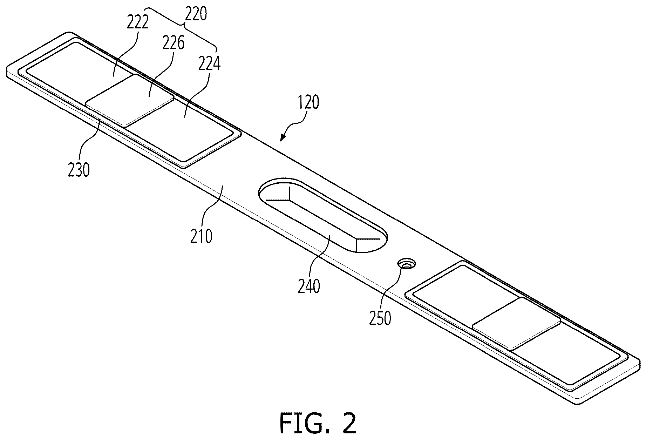

In an embodiment, the terminal plates 130_1 and 130_2 may each be joined to an opening in the cap plate 122. The terminal plates 130_1 and 130_2 may each include a current collector portion electrically connectable to the electrode assembly and an electrode terminal portion continuously connected to the current collector portion in the longitudinal direction of the terminal plates 130_1 and 130_2. In an implementation, the current collector portion of the first terminal plate 130_1 may be connected to a positive electrode of the electrode assembly, and the current collector portion of the second terminal plate 130_2 may be connected to a negative electrode of the electrode assembly. In some embodiments, the electrode terminal portion of the first terminal plate 130_1 may be a positive electrode terminal, and the electrode terminal portion of the second terminal plate 130_2 may be a negative electrode terminal. Examples of the terminal plates 130_1 and 130_2 are described below with reference to FIGS. 2 to 5.

The secondary battery 10 may be, e.g., a lithium battery cell, a sodium battery cell, or the like. However, the secondary battery 10 may include any battery that is capable of repeatedly providing electricity through charging and discharging. In an embodiment, in a case where the secondary battery 10 may be a lithium battery cell, the lithium battery cell may be used in electric vehicles (EVs) because the lithium battery cell has excellent lifespan characteristics and high rate characteristics. In an implementation, the lithium battery cell may be used in EVs such as plug-in hybrid electric vehicles (PHEVs). In an implementation, the lithium battery cell may be used in the fields that require a large amount of power storage. In an implementation, the lithium battery cell may be used, e.g., in an electric bicycle, a power tool, and an energy storage system (ESS).

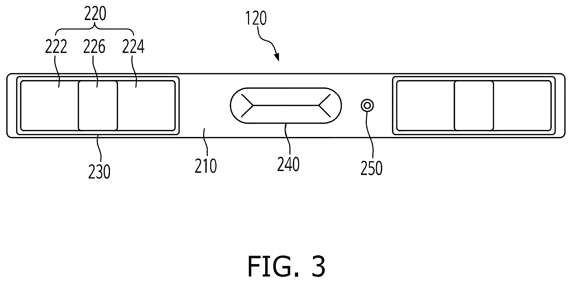

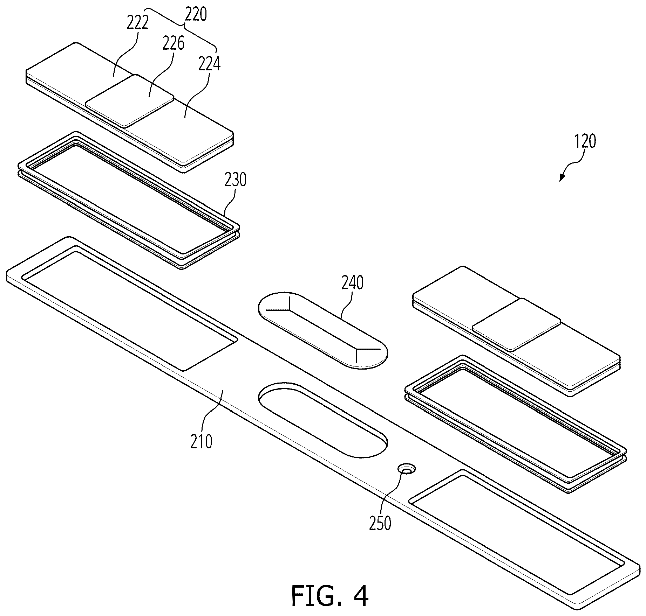

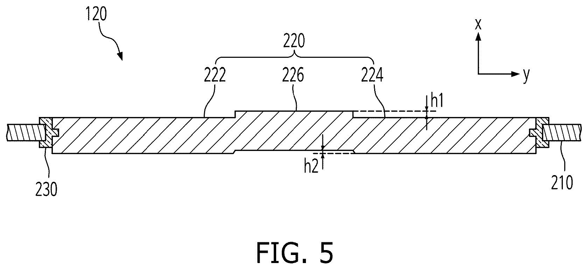

FIG. 2 illustrates a perspective view showing an example of the cap assembly 120 according to an embodiment of the present disclosure, FIG. 3 illustrates a plan view showing an example of the cap assembly 120 according to an embodiment of the present disclosure, FIG. 4 illustrates an exploded perspective view showing an example of the cap assembly 120 according to an embodiment of the present disclosure, and FIG. 5 illustrates a cross-sectional view showing an example of the cap assembly 120 according to an embodiment of the present disclosure.

In an embodiment, referring to FIGS. 2 to 4, the cap assembly 120 may include, e.g., a cap plate 210, a terminal plate 220, an insulator 230, a vent portion 240, and an electrolyte injection port 250 in which a sealing stopper (e.g., 126 of FIG. 1) may be installed. The terminal plate 220 may be joined to the opening in the cap plate 210. In some embodiments, the insulator 230 may be between the cap plate 210 and the terminal plate 220. In some embodiments, the insulator 230 may be between the cap plate 210 and the inner surface of the opening of the terminal plate 220.

In an embodiment, the terminal plate 220 may include current collector portions electrically connectable to the electrode assembly, e.g., configured to electrically connect to the electrode assembly, and an electrode terminal portion 226 continuously connected to the current collector portion in the longitudinal direction of the terminal plate 220. In other words, the terminal plate 220 may consist of electrode terminal portion 226 and current collector portions 222, 224 the three integrally formed and electrically connectable to the electrode assembly, e.g., configured to electrically connect to the electrode assembly. That is, the electrode terminal portion 226 may be continuously connected to (integrally formed with) the current collector portion in the longitudinal direction of the terminal plate 220. In some embodiments, the current collector portion may include, e.g., a first current collector portion 222 and a second current collector portion 224 that are electrically connectable to the electrode assembly. In an implementation, the first current collector portion 222 may be electrically connected to at least a part of the first electrode (or the second electrode) of the electrode assembly, and the second current collector portion 224 may be electrically connected to at least another part of the first electrode (or the second electrode) of the electrode assembly. The electrode terminal portion 226 may be between the first current collector portion 222 and the second current collector portion 224. At least a part of one side surface of the electrode terminal portion 226 may be connected to the first current collector portion 222, and at least a part of the other side surface opposite to the one side surface of the electrode terminal portion 226 may be connected to the second current collector portion 224.

In an embodiment, the electrode terminal portion 226 may be continuously connected to the first current collector portion 222 and the second current collector portion 224. In an implementation, the electrode terminal portion 226 may be integrally formed (e.g., formed simultaneously in a same process and of a same material to define a monolithic and seamless structure) by using the same metal material or conductive material as the first current collector portion 222 and the second current collector portion 224.

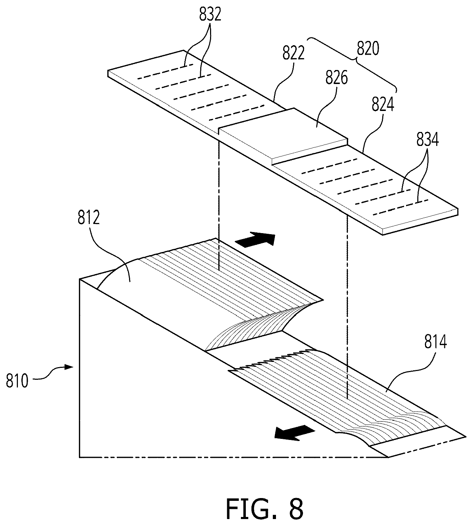

In an embodiment, the current collector portion (e.g., the first current collector portion 222 or the second current collector portion 224) may be electrically connected to the electrode tab of the electrode assembly. In some embodiments, the lower surface of the current collector portions 222 and 224 may be connected to the electrode tab of the electrode assembly through laser welding or the like. An example in which the electrode assembly and the current collector portions 222 and 224 are connected is described in detail below with reference to FIG. 8.

In an embodiment, the thicknesses of the current collector portions 222 and 224 may be determined based on the ease and safety of welding with the electrode tabs of the electrode assembly. In some embodiments, as the thicknesses of the current collector portions 222 and 224 decrease, they may be easier to weld with the electrode tab. For example, when the current collector portions 222 and 224 are slimmer they may be easier to weld to the electrode tab. As the thicknesses of the current collector portions 222 and 224 increase, the durability and safety may be improved against external impact or the like. For example, when the current collector portions 222 and 224 are thicker the durability and safety of the current collector portion against external impact or the like may be improved. In an implementation, considering both the ease of welding with the electrode tab and the improvement of durability and safety, the thickness of the current collector portion may be, e.g., set to 0.1 mm to 3 mm.

In an embodiment, the upper surfaces of the current collector portions 222 and 224 and the upper surface of the electrode terminal portion 226 may be exposed to the same side surface in the thickness direction of the terminal plate 220. For example, the upper surfaces of the current collector portions 222 and 224 and the upper surface of the electrode terminal portion 226 may all face the same direction. In some embodiments, in a case where the cap assembly 120 is joined to the opening of the case (e.g., 110 of FIG. 1) of the battery cell, the upper surfaces of the current collector portions 222 and 224 and the upper surface of the electrode terminal portion 226 may be exposed in the outer direction of the battery cell.

In an embodiment, referring to FIG. 5, the upper surface of the electrode terminal portion 226 may be higher than the upper surface of the current collector portion (e.g., the first current collector portion 222 or the second current collector portion 224) in the thickness direction of the terminal plate 220 (e.g., a direction that is parallel with the x axis of FIG. 5 and perpendicular to the y axis of FIG. 5). That is, the upper surface of the electrode terminal portion 226 may have a protruding shape with a step from the upper surface of the current collector portion in the thickness direction of the terminal plate 220. The vertical levels of the upper surfaces of the first current collector portion 222 and the second current collector portion 224 may be equal to each other in the thickness direction of the terminal plate 220. In an implementation, the distance h1 between the upper surface of the electrode terminal portion 226 and the upper surfaces of the current collector portions 222 and 224 may be, e.g., 0.1 mm to 3 mm in the thickness direction of the terminal plate 220. Accordingly, the upper surface of the electrode terminal portion 226 with a step from the upper surfaces of the current collector portions 222 and 224 may have a form that protrudes toward the outside of the cap assembly 120, thereby facilitating connection to a busbar for electrical connection between battery cells.

In an embodiment, the lower surface of the electrode terminal portion 226 may be higher than the lower surface of the current collector portion (e.g., the first current collector portion 222 or the second current collector portion 224) in the thickness direction of the terminal plate 220. The vertical levels of the lower surfaces of the first current collector portion 222 and the second current collector portion 224 may be equal to each other in the thickness direction of the terminal plate 220. In an implementation, the distance h2 between the lower surface of the electrode terminal portion 226 and the lower surfaces of the current collector portions 222 and 224 may be, e.g., 0.1 mm to 3 mm in the thickness direction of the terminal plate 220. Accordingly, because a separation state between the lower surface of the electrode terminal portion 226, forming a step with the lower surfaces of the current collector portions 222 and 224, and the electrode assembly below the electrode terminal portion 226 may be maintained, a short circuit between the lower surface of the electrode terminal portion 226 and the electrode assembly may be prevented. In addition, an insulator may be on the lower surface of the electrode terminal portion 226 so as to effectively prevent a short circuit with the electrode assembly.

With this configuration, the terminal plate may be implemented by connecting the current collector portion and the electrode terminal portion continuously or integrally, thereby reducing the number of parts required for manufacturing the secondary battery. Furthermore, because the current path between the current collector portion and the electrode terminal portion may be reduced, also the current path between the electrode assembly and the electrode terminal portion may be reduced, and consequently the resistance of (the conductor in) the terminal plate may be reduced and the electrical performance of the secondary battery may be therefore improved. Additionally, by reducing the space between the current collector portion and the electrode terminal portion included in the cap assembly, the size or volume of the electrode assembly that may be accommodated in the case joined to the cap assembly may be increased, and thus, the energy density of the secondary battery may be improved.

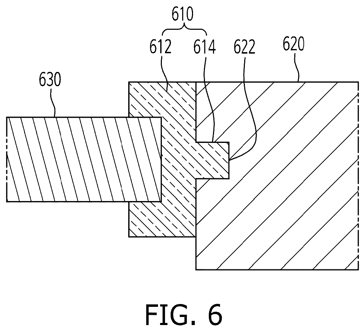

FIG. 6 illustrates an example in which an insulator 610 and a terminal plate 620 are joined in an opening of a cap plate 630 according to an embodiment of the present disclosure. In an embodiment, the insulator 610 may be between the terminal plate 620 and the cap plate 630. In some embodiments, the insulator 610 may be between one side surface of the terminal plate 620 and one side surface of the cap plate 630. The insulator 610 may include an insulating material.

In an embodiment, the insulator 610 may include, e.g., a joining portion 612 that is joined to one side surface of the cap plate 630 and a protrusion portion 614 that is joined to one side surface of the terminal plate 620. One side surface of the cap plate 630 may be inserted into the joining portion 612 and engaged with the joining portion 612. For example, a side surface of the cap plate 630 may extend into and be partially surrounded by the joining portion 612. In some embodiments, the terminal plate 620 may include a recessed portion 622 that is engaged with, e.g., partially surrounds, the protrusion portion 614. In an implementation, the protrusion portion 614 of the insulator 610 may be inserted into and joined to the recessed portion 622 of the terminal plate 620. For example, the protrusion portion 614 of the insulator 610 may extend into the recessed portion of the terminal plate 620.

In an embodiment, at least a part of the side surface of the terminal plate 620 that comes into contact with the insulator 610 may be surface-treated to improve bonding strength. As a result, the terminal plate 620 comprises pores on at least a part of a side surface of the terminal plate 620 that is in direct contact with the insulator 610. Said pores improve bonding strength between the surfaces of the terminal plate 620 and the insulator. The surface treatment on the side surface of the terminal plate 620 may include etching treatment and electrolytic treatment. In some embodiments, at least a part of the side surface of the terminal plate 620 may be degreased to remove contaminants such as oil present on the surface. In an implementation, the degreasing treatment may be performed using a degreasing solution together with ultrasonic treatment on the side surface of the terminal plate 620. The ultrasonic treatment may be performed using an ultrasonic cleaner, and the application of the degreasing solution may be performed by stirring and immersing the side surface of the terminal plate 620 in the degreasing solution. Thereafter, pores may be formed on the surface of at least a part of the side surface of the terminal plate 620 by using an etching solution. The etching treatment may be performed by stirring and immersing the side surface of the terminal plate 620 in the etching solution. In some embodiments, the etching solution remaining on the surface may be removed by heating at least a part of the side surface of the terminal plate 620. In this case, by performing an anodic oxidation reaction using an electrolyte on at least a part of the side surface of the terminal plate 620, a coating layer including fine protrusions in the pores in the surface of the terminal plate 620 may be formed. The electrolytic treatment on the side surface of the terminal plate 620 may be performed by causing an anodic oxidation reaction in the electrolyte using the terminal plate 620 as the positive electrode and an insoluble electrode as the negative electrode. During this processing, the electrolyte remaining on the surface of the terminal plate 620 may be removed through heating.

In an embodiment, the terminal plate 620 on which the etching treatment and the electrolytic treatment have been performed may be joined to the insulator 610 made of a polymer resin. That is, the terminal plate 620 including pores on at least parts of its surface is directly joined to the insulator 610 made of a polymer resin. The resin may have in this case an improved adhesion and thus improved sealing properties with the surface of the terminal plate. In an implementation, the terminal plate 620 on which the etching treatment and the electrolytic treatment have been performed may be inserted into a mold and then bonded to the insulator 610 by injecting and curing the molten polymer resin. The polymer resin used as the material of the insulator 610 may include, e.g., polybutylene terephthalate (PBT), polyphenylene sulfide (PPS), polyphthalamides (PPA), polyethylene terephthalate (PET), polycarbonate (PC), polyimide (PI), polyaryletherketone (PAEK), or polyether-etherketone (PEEK). The polymer resin may include any one of various polymer resins.

In an embodiment, not only the side surface of the terminal plate 620 that comes into contact with the insulator 610 but also the side surface of the cap plate 630 that comes into contact with the insulator 610 may be surface-treated. The surface treatment method of the terminal plate 620 described above may be equally applied to the surface treatment of the cap plate 630. As a result, the cap plate 630 comprises pores on at least a part of a side surface of cap plate 630 that is in direct contact with the insulator 610. Said pores improve bonding strength between the surfaces of the cap plate 630 and the insulator. Accordingly, the insulator 610 and the terminal plate 620 may be airtightly connected to the opening in the cap plate 630. For example, the insulator 610 and the terminal plate 620 may completely seal the opening of the cap plate 630.

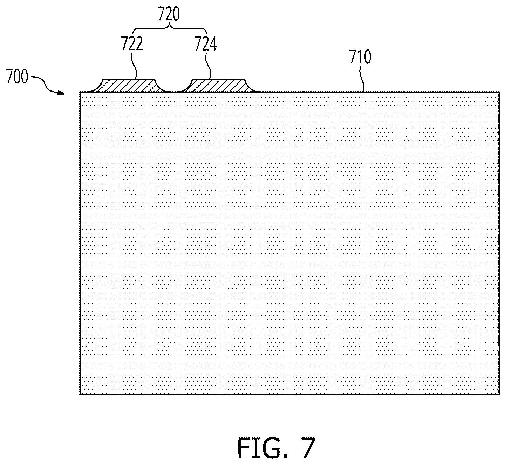

FIG. 7 illustrates an example of an electrode plate 700 according to an embodiment of the present disclosure. The electrode plate 700 shown in FIG. 7 may be a part of an electrode assembly accommodated in the case 110 of the secondary battery 10 shown in FIG. 1.

In an embodiment, referring to FIG. 7, the electrode plate 700 used in the electrode assembly may include, e.g., a coated portion 710 formed by applying a positive electrode active material or a negative electrode active material onto a substrate and an uncoated portion on which no active material is applied. The uncoated portion may be cut by pressing or the like to form a plurality of tabs (or electrode tabs) 720.

In an embodiment, the tabs 720 on one side of the electrode plate 700 may include, e.g., a first tab 722 and a second tab 724 spaced apart from the first tab 722. In some embodiments, the positions of the tabs 720 on one side of the electrode plate 700 may be different depending on the polarity. In an implementation, in a case where the polarity of the electrode plate 700 is positive, the tabs 720 may be on the upper left side of the electrode plate 700, and in a case where the polarity of the electrode plate 700 is negative, the tabs 720 may on the upper right side of the electrode plate 700.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}GnO₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L' is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

FIG. 8 illustrates an example in which an electrode assembly 810 is connected to a terminal plate 820 according to an embodiment of the present disclosure. In an embodiment, referring to FIG. 8, the electrode assembly 810 may include, e.g., a plurality of electrode plates (e.g., 700 of FIG. 7) having a plurality of tabs formed on one side thereof and a separator between the electrode plates. A plurality of first tabs 812 and a plurality of second tabs 814 may be protruded and aligned, e.g., aligned with each other, on one side of the electrode assembly 810. The first tabs 812 and the second tabs 814 may be spaced apart from each other at a certain interval on one side of the electrode assembly 810.

In an embodiment, the electrode assembly 810 may be electrically connected to the terminal plate 820. The terminal plate 820 may correspond to the terminal plate 220 described above with reference to FIGS. 2 to 6. The terminal plate 820 may include, e.g., a first current collector portion 822, a second current collector portion 824, which may be electrically connectable to the electrode assembly 810, and an electrode terminal portion 826. The electrode terminal portion 826 may be continuously or integrally connected to the first current collector portion 822 and the second current collector portion 824 in the longitudinal direction of the terminal plate 820.

In an embodiment, the electrode terminal portion 826 of the terminal plate 820 may be between the first current collector portion 822 and the second current collector portion 824. In some embodiments, the first tabs 812 may be connected to the first current collector portion 822, and the second tabs 814 may be connected to the second current collector portion 824. The separation distance between the first tabs 812 and the second tabs 814 may correspond to the length of the electrode terminal portion 826 in the longitudinal direction of the terminal plate 820. In this configuration, the first current collector portion 822 and the second current collector portion 824, which may be respectively connected to opposite sides of the electrode terminal portion 826, may correspond to the positions of the first tabs 812 and the second tabs 814. Additionally, because the lower surface of the electrode terminal portion 826 may be higher than the lower surfaces of the first current collector portion 822 and the second current collector portion 824, a short between the electrode terminal portion 826 and the tabs may be prevented.

In an embodiment, the electrode assembly 810 may be electrically connected to the terminal plate 820 through the first tabs 812 and the second tabs 814. In some embodiments, the first tabs 812 and the second tabs 814 may be respectively connected to the first current collector portion 822 and the second current collector portion 824 in a bent state. The bending direction of the first tabs 812 may be different from the bending direction of the second tabs 814. For example, referring to FIG. 8, a first welded portion 832 may be formed by welding the first tabs 812 to the first current collector portion 822 in a state of being collectively bent toward the first side surface of the electrode assembly 810. In addition, a second welded portion 834 may be formed by welding the second tabs 814 to the second current collector portion 824 in a state of being collectively bent toward the second side surface opposite to the first side surface of the electrode assembly 810. The first welded portion 832 and the second welded portion 834 may be formed through ultrasonic welding.

With this configuration, the first tabs and the second tabs may be bent in different directions and respectively connected to two current collector portions connected to opposite sides of the electrode terminal portion of the terminal plate. Accordingly, even in a case where one of the tabs formed on one electrode plate (e.g., two tabs bent in opposite directions) is not connected to the terminal plate, another one of the tabs may be connected to the terminal plate. In some embodiments, a pair of tabs formed on one electrode plate may have a complementary connection structure with respect to the terminal plate. Accordingly, even in a case where the length of the tabs of the electrode plate is shortened so as to increase the capacity of the secondary battery, the electrical safety of the secondary battery may be improved because the tabs of the electrode plate may be effectively connected to the terminal plate.

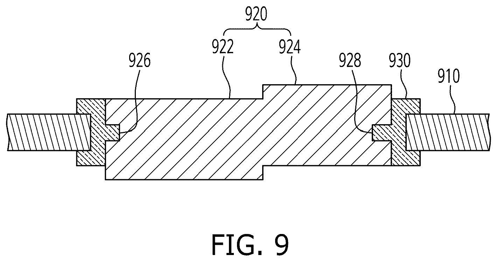

FIG. 9 illustrates an example of a terminal plate 920 according to an embodiment of the present disclosure. In an embodiment, the terminal plate 920 may be joined to an opening formed in a cap plate 910. In some embodiments, an insulator 930 may be between the cap plate 910 and the terminal plate 920.

In an embodiment, the terminal plate 920 may include, e.g., a current collector portion 922 electrically connectable to an electrode assembly, and an electrode terminal portion 924 continuously or integrally connected to the current collector portion 922 in the longitudinal direction of the terminal plate 920. The upper surface of the electrode terminal portion 924 may be higher than the upper surface of the current collector portion 922 with a step in the thickness direction of the terminal plate 920. The lower surface of the electrode terminal portion 924 may be higher than the lower surface of the current collector portion 922 and form a step in the thickness direction of the terminal plate 920.

In an embodiment, the terminal plate 920 may include a recessed portion engaged with the insulator 930. In some embodiments, the terminal plate 920 may include a first recessed portion 926 in which the current collector portion 922 and the insulator 930 are engaged with each other, and a second recessed portion 928 in which the electrode terminal portion 924 and the insulator 930 are engaged with each other. The method in which the terminal plate 920 is engaged with the insulator 930 may be similar to that described above with reference to FIG. 6.

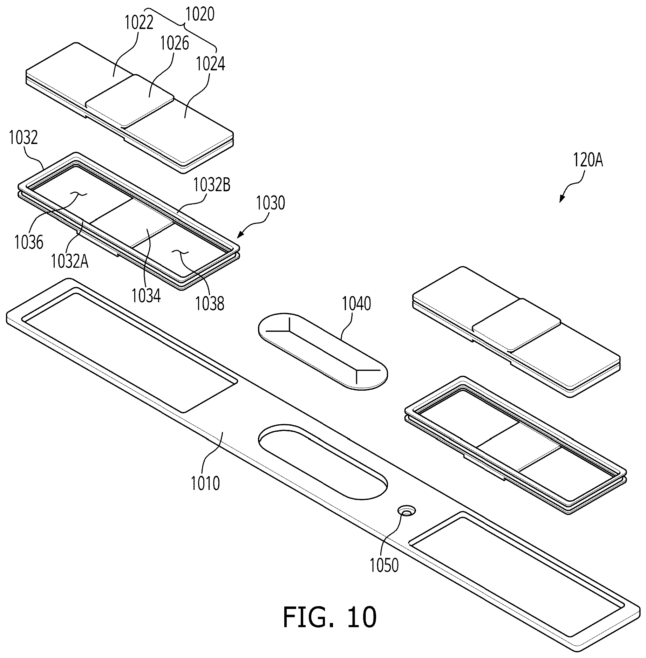

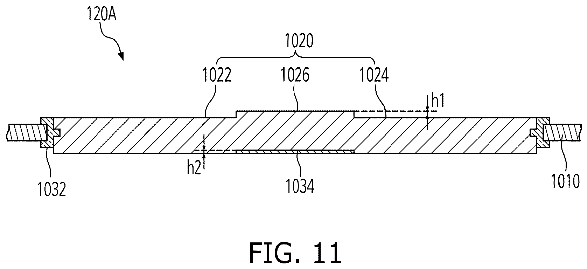

FIG. 10 is an illustration of an exploded perspective view showing a cap assembly 120A according to an embodiment of the present disclosure, and FIG. 11 is a cross-sectional view illustrating the same example of the cap assembly 120A. In an embodiment, referring to FIG. 10, the cap assembly 120A may include a cap plate 1010, a terminal plate 1020, an insulator 1030, a vent part 1040, and an electrolyte injection hole 1050 in which a sealing stopper, e.g., sealing stopper 126 of FIG. 1, may be installed. Here, the terminal plate 1020 may be coupled to an opening formed in the cap plate 1010.

An insulator 1030 may include a peripheral part 1032 between a cap plate 1010 and a terminal plate 1020, and a connection part 1034 connecting a first side surface of the peripheral part 1032A and a second side surface of the peripheral part 1032B facing each other in a longitudinal direction of the peripheral part 1032. The insulator 1030 may include a first opening 1036 and a second opening 1038 formed by the connection part 1034. For example, as may be seen in FIG. 10, the first opening 1036 and the second opening 1038 may be distinct openings each boarded by the connection part and the peripheral part.

The connection part 1034 of the insulator 1030 may connect a lower part of a first side surface of the peripheral part 1032A and a lower part of a second side surface of the peripheral part 1032B, which may face each other in a longitudinal direction of a peripheral part 1032, and the peripheral part 1032 and the connection part 1034 may be integrally formed by an injection process. The peripheral part 1032 may be between the inner surface of the openings of the cap plate 1010 and the terminal plate 1020. In an implementation, the peripheral part 1032 may be between the cap plate 1010 and an inner surface of an opening of the terminal plate 1020.

In an embodiment, the insulator 1030 may include a material having electrical insulation, e.g., is an electrical insulator, and thermal conductivity. In an implementation, the insulator 1030 may include, e.g., a ceramic with excellent thermal conductivity, aluminum nitride (AIN, Aluminum Nitride), alumina (Alumina, Aluminum Oxide), boron nitride (BN, Boron Nitride), or aluminum metal powder.

In an embodiment, the insulator 1030 may lower a physical percolation threshold by controlling an aspect ratio of a metal or ceramic and characteristics of a ceramic-polymer interface, and accordingly, may improve thermal conductivity. In an implementation, thermal conductivity may be improved by precisely controlling defects in a crystal of the insulator 1030, a dispersion structure, interface characteristics, or an aspect ratio. In an embodiment, the terminal plate 1020 may include, e.g., current collectors 1022 and 1024 which may be electrically connectable to an electrode assembly, and an electrode terminal part 1026 continuously connected to the current collector in a longitudinal direction of the terminal plate 1020.

Specifically, the current collector (e.g., current collector portion) may include a first current collector 1022 and a second current collector 1024 which may be electrically connectable to the electrode assembly. In an implementation, the first current collector 1022 may be electrically connected to at least a portion of a first electrode (or a second electrode) of the electrode assembly, and the second current collector 1024 may be electrically connected to at least another portion of the first electrode (or the second electrode) of the electrode assembly. Here, the electrode terminal part 1026 may be between the first current collector 1022 and the second current collector 1024. At least a portion of one side surface of the electrode terminal part 1026 may be connected to the first current collector 1022, and at least a portion of the other side surface opposite to the one side surface of the electrode terminal part 1026 may be connected to the second current collector 1024.

In an embodiment, the electrode terminal part 1026 may be continuously connected to the first current collector 1022 and the second current collector 1024. In an implementation, the electrode terminal part 1026 may be manufactured integrally using the same metal material or conductive material as the first current collector 1022 and the second current collector 1024.

In an embodiment, the first current collector 1022 may be coupled to, e.g., may border, the first opening 1036 of the insulator 1030, and the second current collector 1024 may be coupled to, e.g., may border, the second opening 1038 of the insulator 1030.

In an embodiment, the connection part 1034 of an insulator 1030 may be below the electrode terminal part 1026. Accordingly, a short with an electrode assembly may be effectively prevented. In an implementation, by applying the insulator 1030 with excellent thermal conductivity, heat that may be generated by concentration of current in current collectors 1022 and 1024 and the electrode terminal part 1026 may be effectively dissipated. In particular, because a temperature of the electrode terminal part 1026 may be the highest part, e.g., the temperature of the cap assembly 120A may be the greatest at the electrode terminal part 1026, presence of the insulator 1030 with excellent thermal conductivity below the electrode terminal part 1026 may itself be effective for heat dissipation.

In an embodiment, a current collector (e.g., a first current collector 1022 or a second current collector 1024) may be electrically connected to an electrode tab of an electrode assembly. Specifically, a lower surface of the current collector may be connected to the electrode tab of the electrode assembly through laser welding or the like.

In an embodiment, a thickness of current collectors 1022 and 1024 may be determined based on ease and safety of welding with an electrode tab of an electrode assembly. Specifically, as the thickness of the current collectors 1022 and 1024 is smaller, welding with the electrode tab may be easier, and as the thickness of the current collectors 1022 and 1024 is larger, durability and safety due to an external impact or the like may be improved. In an implementation, a thickness of the current collector may be set to 0.1 mm to 3 mm in consideration of both ease of welding with an electrode tab and improvement of durability and safety.

In an embodiment, in a thickness direction of the terminal plate 1020, an upper surface of current collectors 1022 and 1024 and an upper surface of an electrode terminal part 1026 may be exposed to the same side. In an implementation, when the cap assembly 120A is coupled to an opening of a case of a battery cell (e.g., the case 110 of FIG. 1), the upper surface of the current collectors 1022 and 1024 and the upper surface of the electrode terminal part 1026 may be exposed to the exterior outward direction of the battery cell.

Referring to FIG. 11, in a thickness direction of a terminal plate 1020, an upper surface of an electrode terminal part 1026 may be located higher than an upper surface of a current collector (e.g., a first current collector 1022 or a second current collector 1024). That is, in the thickness direction of the terminal plate 1020, the upper surface of the electrode terminal part 1026 may have a protruding shape with a step from the upper surface of the current collector. In the thickness direction of the terminal plate 1020, vertical levels of upper surfaces of the first current collector 1022 and the second current collector 1024 may be same as each other. In an implementation, in the thickness direction of the terminal plate 1020, a distance h1 between the upper surface of the electrode terminal part 1026 and an upper surface of the current collectors 1022 and 1024 may be 0.1 mm to 3 mm. Accordingly, the upper surface of the electrode terminal part 1026 having a step with the upper surface of the current collectors 1022 and 1024 may have a shape such they protrude toward the outside of, e.g., away from, the cap assembly 120A, and may be easily connected to a busbar for electrical connection between battery cells.

In an embodiment, in a thickness direction of a terminal plate 1020, a lower surface of an electrode terminal part 1026 may be located higher than a lower surface of a current collector (e.g., the first current collector 1022 or the second current collector 1024). Here, in the thickness direction of the terminal plate 1020, vertical levels of lower surfaces of the first current collector 1022 and the second current collector 1024 may be same as each other. In an implementation, in the thickness direction of the terminal plate 1020, a distance h2 between the lower surface of the electrode terminal part 1026 and a lower surface of the current collectors 1022 and 1024 may be 0.1 mm to 3 mm. Accordingly, a spaced state between the lower surface of the electrode terminal part 1026 having a step with the lower surface of the current collectors 1022 and 1024 and an electrode assembly located below the electrode terminal part 1026 may be maintained.

The connection part 1034 may be below the electrode terminal part 1026. A thickness of the electrode terminal part 1026 and the connection part 1034 may be greater than or equal to 2 mm in consideration of rigidity. The thickness of the connection part 1034 may be greater than or equal to 1 mm to facilitate ease of injection, but is not limited thereto.

In an embodiment, in a thickness direction of a terminal plate 1020, a vertical level of a lower surface of a connection part 1034 may be same as a vertical level of a lower surface of current collectors 1022 and 1024. In an implementation, there may be a step between the lower surface of the connection part 1034 and the lower surface of the current collectors 1022 and 1024. In this case, a range of the step may be determined according to a distance (e.g., 0.2 mm to 1.5 mm) between the current collectors 1022 and 1024 and an electrode assembly.

Due to this configuration, by implementing a terminal plate by continuously or integrally connecting a current collector and an electrode terminal part, a number of components required for manufacturing a secondary battery may be reduced. In addition, because a current path between the current collector and the electrode terminal part is reduced, a current path between an electrode assembly and the electrode terminal part may be reduced. Accordingly, because a conductor of resistance is reduced in the terminal plate, electrical performance of the secondary battery may be improved. In addition, because a space between the current collector included in a cap assembly and the electrode terminal part is reduced, a size or a volume of the electrode assembly that may be accommodated inside a case coupled to the cap assembly may be increased, and accordingly, an energy density of the secondary battery may be improved.

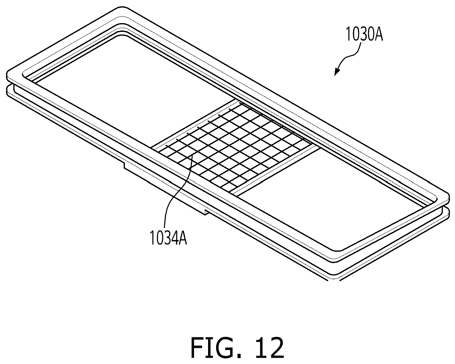

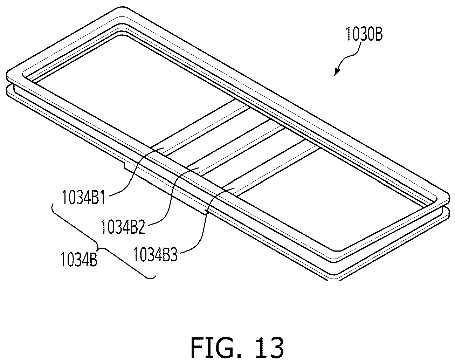

FIG. 12 is a diagram illustrating an example of an insulator 1030A according to an embodiment of the present disclosure, and FIG. 13 is a diagram illustrating an example of an insulator 1030B according to another embodiment of the present disclosure. Referring to FIG. 12, a connection part 1034A of an insulator 1030A may be formed in a mesh type. Referring to FIG. 13, a connection part 1034B of an insulator 1030B may include a plurality of legs 1034B1, 1034B2, and 1034B3. By providing the insulator 1030A of FIG. 12 or the insulator 1030B of FIG. 13, while material use of the insulator is reduced, a short between a lower surface of an electrode terminal part and an electrode assembly may be effectively prevented.

By way of summation and review, the electrode terminal of the secondary battery may be connected to the electrode assembly through a current collector plate between the electrode assembly and the electrode terminal. However, the current collector plate may lengthen the current path between the electrode assembly and the electrode terminal, which may increase the resistance of the conductor. Accordingly, the performance of the secondary battery may be deteriorated.

According to some embodiments of the present disclosure, because the current collector and the electrode terminal portion may be connected continuously or integrally, the number of parts required for manufacturing the secondary battery may be reduced.

According to some embodiments of the present disclosure, because the current collector and the electrode terminal portion may be connected continuously or integrally, the current path between the current collector and the electrode terminal portion may be reduced, and thus, the current path between the electrode assembly and the electrode terminal portion may be reduced. Accordingly, because the resistance of the conductor may be reduced, the performance of the secondary battery may be improved.

According to some embodiments of the present disclosure, the energy density of the secondary battery may be improved by omitting or reducing the space between the current collector and the electrode terminal portion.

According to some embodiments of the present disclosure, because the first tabs and the second tabs may be bent in different directions and connected to the terminal plate, at least one of the tabs formed on one electrode plate may be connected to the terminal plate. Accordingly, even in a case where the length of the tab of the electrode plate is shortened, the tab of the electrode plate may be connected to the terminal plate, and thus, the electrical safety of the secondary battery may be improved.

These and other aspects and features of the present disclosure are described in or are apparent from the above description of embodiments of the present disclosure.

However, aspects and features of the present disclosure are not limited to those described above, and other aspects and features not mentioned will be clearly understood by a person skilled in the art from the detailed description, described above.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (10), comprising:
an electrode assembly (810) including a plurality of electrode plates (700) having a plurality of tabs (720) on one side thereof and a separator between the electrode plates (700);
a case (110) accommodating the electrode assembly (810) and having an opening on one side thereof; and
a cap assembly (120) joined to the opening of the case (110),
wherein the cap assembly (120) includes:
a cap plate (122, 210, 630, 910),
a terminal plate (130_1, 130_2, 220, 620, 820, 920) joined to an opening in the cap plate (122, 210, 630, 910), and
an insulator (230, 610, 930) between the cap plate (122, 210, 630, 910) and the terminal plate (130_1, 130_2, 220, 620, 820, 920), and
wherein the terminal plate (130_1, 130_2, 220, 620, 820, 920) includes:
a current collector (222, 224, 822, 824, 922) portion electrically connectable to the electrode assembly (810), and
an electrode terminal portion (226, 826, 924) continuously connected to the current collector (222, 224, 822, 824, 922) portion in a longitudinal direction of the terminal plate (130_1, 130_2, 220, 620, 820, 920).

2. The secondary battery (10) as claimed in claim 1, wherein the plurality of tabs (720) are connected to the current collector (222, 224, 822, 824, 922) portion in a bent state.

3. The secondary battery (10) as claimed in claim 1 or 2, wherein:
the plurality of tabs (720) include a first tab (722, 812) and a second tab (724, 814) spaced apart from the first tab (722, 812) (722), and
a bending direction of the first tab (722, 812) is different from a bending direction of the second tab (724, 814).

4. The secondary battery (10) as claimed in one of the preceding claims, wherein:
the current collector (222, 224, 822, 824, 922) portion includes a first current collector (222, 224, 822, 824, 922) portion and a second current collector (222, 224, 822, 824, 922) portion that are each electrically connectable to the electrode assembly (810), and
the electrode terminal portion (226, 826, 924) is between the first current collector (222, 822) portion and the second current collector (224, 824) portion.

5. The secondary battery (10) as claimed in claim 4, wherein:
the plurality of tabs (720) include a first tab (722, 812) and a second tab (724, 814) spaced apart from the first tab (722, 812),
the first tab (722, 812) (722) is connected to the first current collector (222, 822) portion, and
the second tab (724, 814) (724) is connected to the second current collector (224, 824) portion.

6. The secondary battery (10) as claimed in one of the preceding claims, wherein an upper surface of the electrode terminal portion (226, 826, 924) is higher than an upper surface of the current collector (222, 224, 822, 824, 922) portion in a thickness direction of the terminal plate (130_1, 130_2, 220, 620, 820, 920).

7. The secondary battery (10) as claimed in one of the preceding claims, wherein a lower surface of the electrode terminal portion (226, 826, 924) is higher than a lower surface of the current collector (222, 224, 822, 824, 922) portion in a thickness direction of the terminal plate (130_1, 130_2, 220, 620, 820, 920).

8. The secondary battery (10) as claimed in one of the preceding claims, wherein an upper surface of the current collector (222, 224, 822, 824, 922) portion and an upper surface of the electrode terminal portion (226, 826, 924) face the same direction.

9. The secondary battery (10) as claimed in one of the preceding claims, wherein:
the insulator (230, 610, 930) includes a protrusion portion (614) extending into the terminal plate (130_1, 130_2, 220, 620, 820, 920) and a joining portion (612) joined to the cap plate (122, 210, 630, 910), and
the terminal plate (130_1, 130_2, 220, 620, 820, 920) includes a recessed portion (622) engaged with the protrusion portion (614).

10. The secondary battery (10) as claimed in one of the preceding claims, wherein the terminal plate comprises pores on at least a part of a side surface of the terminal plate (130_1, 130_2, 220, 620, 820, 920) that is in direct contact with the insulator (230, 610, 930).

11. The secondary battery (10) as claimed one of the preceding in claims, wherein:
the terminal plate (920) includes a first recessed portion (926) in which the current collector portion (922) and the insulator (930) are engaged with each other, and a second recessed portion (928) in which the electrode terminal portion (924) and the insulator (930) are engaged with each other.

12. A cap assembly (120), comprising:
a cap plate (1010);
a terminal plate (1020) coupled to an opening in the cap plate (1010); and
an insulator (1030) between the cap plate (1010) and the terminal plate (1020) , the insulator (1030) including a peripheral part, a connection part connecting a first side surface of the peripheral part (1032A) and a second side surface of the peripheral part (1032B) facing each other in a longitudinal direction of the peripheral part, and a first opening (1036) and a second opening (1038) each bordered by the connection part and the peripheral part,
wherein:
the terminal plate (1010) includes:
a current collector (1022, 1024) electrically connectable to an electrode assembly, and
an electrode terminal part (1026) continuously connected to the current collector (1022, 1024) in a longitudinal direction of the terminal plate (1010),
the current collector (1022, 1024) includes a first current collector (1022) and a second current collector (1024) which are electrically connectable to the electrode assembly,
the electrode terminal part (1026) is between the first current collector (1022) and the second current collector (1024),
the first current collector (1022) borders the first opening (1036) and the second current collector (1024) borders the second opening (1038), and
the connection part (1034) is below the electrode terminal part.

13. The cap assembly as claimed in claim 12, wherein:
the connection part (1034) connects a lower part of the first side surface of the peripheral part (1032A) and a lower part of the second side surface of the peripheral part (1032B) to each other, and
the peripheral part (1032A, 1032B) and the connection part (1034) are integrally formed.

14. The cap assembly as claimed in claim 12 or 13, wherein, in a thickness direction of the terminal plate (1020), an upper surface of the electrode terminal part (1026 )is higher than an upper surface of the current collector (1022, 1024).

15. The cap assembly as claimed in one of the preceding claims 12 to 14, wherein, in a thickness direction of the terminal plate (1020), a lower surface of the electrode terminal part (1026) is higher than a lower surface of the current collector (1022, 1024).
